Europäisches Patentamt

European Patent Office

Office européen des brevets

(11) Veröffentlichungsnummer: **0 199 236 B1**

# (12) EUROPÄISCHE PATENTSCHRIFT

(45) Veröffentlichungstag der Patentschrift: **17.10.90**

(51) Int. Cl.⁵: **B 29 C 71/00**

(21) Anmeldenummer: **86105083.9**

(22) Anmeldetag: **14.04.86**

(54) **Kunststoffteile mit quasi dielektrisch isotropem Aufbau.**

(30) Priorität: **26.04.85 DE 3515109**

(43) Veröffentlichungstag der Anmeldung:
**29.10.86 Patentblatt 86/44**

(45) Bekanntmachung des Hinweises auf die
Patenterteilung:
**17.10.90 Patentblatt 90/42**

(84) Benannte Vertragsstaaten:
**BE DE FR GB IT NL SE**

(56) Entgegenhaltungen:
**DE-A-1 504 731**
**DE-A-1 914 138**
**DE-B-1 081 212**
**DE-B-1 937 238**
**FR-A-2 451 259**
**FR-A-2 474 942**
**FR-A-2 489 739**
**US-A-3 298 065**
**US-A-3 558 216**
**US-A-4 339 303**

(73) Patentinhaber: **BAYER AG**
**D-5090 Leverkusen 1 Bayerwerk (DE)**

(72) Erfinder: **Depcik, Hans-Werner**
**Vennstrasse 124A**
**D-4000 Düsseldorf 22 (DE)**
Erfinder: **Fitzky, Hans Georg, Dr.**
**Adolf-Kolping-Strasse 7**
**D-5068 Odenthal (DE)**
Erfinder: **Schmid, Helmut, Dr.**
**Wedelstrasse 69**
**D-4150 Krefeld (DE)**
Erfinder: **Schütz, Ulrich, Dipl.-Ing.**
**Märzgässchen 10**
**D-5653 Leichlingen (DE)**

Courier Press, Leamington Spa, England.

**Beschreibung**

Die Erfindung betrifft ein Verfahren zum Erzeugen eines quasi dielektrisch isotropen Aufbaues mit geringer Doppelbrechung in spritzgegossenen Kunststoffteilen, wobei eine mindestens noch teilweise formbare Masse mit einem elektrischen Wechselfeld beaufschlagt wird.

Verfahren gemäß dem Oberbegriff sind bekannt.

Beispielsweise werden in FR-A-24 51 259 und FR-A-24 74 942 Verfahren und Vorrichtungen beschrieben, die der Verbesserung der physikalischen Eigenschaften, insbesondere der mechanischen und optischen Eigenschaften, formbarer Materialien dienen. Die bekannten Verfahren beinhalten die Behandlung der Materialien während Phasenübergängen mittels mechanischer Schwingungen und/oder mittels Anlegen eines elektromagnetischen Wechselfeldes unter gleichzeitiger kontrollierter Temperaturveränderung.

Aus US 4,339,303 ist ein Verfahren bekannt, bei dem sulfonhaltige Polymere einem elektromagnetischen Wechselfeld ausgesetzt werden, um Spannungen innerhalb des Materials abzubauen.

Bei magneto-optischen Speicherverfahren müssen insbesondere bei engem Signalabstand die Trägermaterialien möglichst doppelbrechungsfrei sein, damit beim Auslesen der magnetisch gespeicherten Information ein gutes Signal/Rauschverhältnis vorhanden ist.

Nach dem Spritzguß-Verfahren hergestellte Kunststoffteile können senkrecht zur Fließrichtung hohe Doppelbrechungswerte aufweisen. Infolge der Schergeschwindigkeiten beim Werkzeugfüllvorgang werden nämlich die Makromoleküle stark ausgerichtet, wobei der Grad der Doppelbrechung beispielsweise bei amorphen Thermoplasten außer von der Art der Polymeren vom Temperatur- und Strömungsfeld bis zum Erreichen der Glastemperatur abhängt. Besonders hohe Werte der Doppelbrechung ergeben sich in oberflächennahen Schichten, wobei in Richtung des Angusses mit einer Zunahme zu rechnen ist.

Die Anhebung der Massetemperatur, der Formentemperatur und Reduktion des Nachdrucks bringt, vornehmlich im Inneren des Kunststoffteils Verbesserungen, die normalerweise den Ansprüchen an geringe Doppelbrechungsfreiheit nicht genügen.

Der Erfindung liegt die Aufgabe zugrunde, ein wirtschaftliches Verfahren zu finden, welches die vorstehenden Nachteile vermeidet. Insbesondere soll das Verfahren erlauben übliche Kunststoffteile die beispielsweise durch Gießen oder Spritzgießen hergestellt werden, in der Struktur soweit zu beeinflussen, daß sie eine quasi optische, mechanisch-technologische und dielektrische Isotropie aufweisen. Die fertigen Kunststoffteile sollen also spannungsarm und doppelbrechungsfrei bei geringem Mittelwert und minimalen Spitzenabweichungen sein.

Die Aufgabe wird erfindungsgemäß dadurch gelöst, daß durch Anlegen eines elektrischen Wechselfeldes von $10^4$ bis $2,5 \times 10^9$ Hz der

formbaren Masse Wärme erzeugende und die mindestens teilweise beweglichen Dipole einem Relaxationsprozeß unterwerfende Energie zugeführt wird und daß dieses Wechselfeld kontinuierlich und/oder stufenweise bis zum Einfrieren der Dipole vermindert wird.

Durch eine gezielte Beeinflussung während der Erstarrung wird die fertigungsbedingte Ausrichtung der Dipole der Polymere — vorzugsweise in Richtung der Dicke —, die zur Doppelbrechung bzw. mechanisch anisotropen Aufbau führen kann, mittels eines Wechselfeldes, dessen Richtung ständig umgepolt wird (plus-minus), beidseitig bzw. verringert.

Gleichzeitig wird dafür gesorgt, daß durch beispielsweises stufenweises Zurücknehmen der Energie die quasi isotrope Verteilung der Dipole eingefroren wird. Dieser Zustand wird beispielsweise bei der technischen Durchführung durch Unterschreiten der Schmelz- bzw. Glastemperatur um 10°C erreicht.

Da das Wechselfeld unmittelbar nach Einleiten der Masse in die Form, wo bekanntlich die Dipole der Polymere beweglich sind, einsetzen kann, ist der zusätzliche Energieverbrauch gering im Vergleich zur Aufheizenergie.

Gleichzeitig wird die Zeit bis zur Erstarrung nur bedingt verlängert, wodurch das Verfahren wirtschaftlich bleibt. Schließlich ist erstaunlich, daß durch dieses Verfahren die insbesondere im Oberflächenbereich vorhandene Doppelbrechung auf 1/2, 1/3 oder unter 1/5 des Wertes je nach Dauer der Einwirkung verringert werden kann, der sonst bei gleicher Zeit und Temperaturführung der plastischen Masse nach üblichem Prozeßablauf erreicht wird.

Durch die geringe Doppelbrechung wird ein ausgezeichnetes Signal-/Rauschverhältnis erzielt.

Zugleich werden die Eigenspannungen des Kunststoffteiles auf sehr niedrigem Niveau eingefroren.

In einer vorteilhaften Durchführung des Verfahrens wird durch Zufuhr von Energie ein Temperaturgradient eingestellt, der·dem üblichen Temperaturgefälle nach außen entgegen wirkt.

Während des Erstarrungsvorganges wird die Masse in den Randbereichen, d.h. also entgegengesetzt zur normalen Abkühlungsrichtung, durch Zufuhr von Energie wieder aufgeheizt, um die ursprünglich durch die Form und den Materialfluß vorgegebene und durch die schnellere Abkühlung eingefrorene Ausrichtung der Dipole unter Einwirkung des Wechselfeldes in eine quasi dielektrische isotrope Anordnung zu überführen, um sie dann einzufrieren.

In einer wirtschaftlichen Durchführung des Verfahrens wird als Wechselfeld ein räumlich stehendes elektrisches Wechselfeld mit einer Frequenz von $10^4$ bis $10^8$ Hz, vorzugsweise $10^4$ bis $10^5$ Hz, bei einer Feldstärke von 1 bis 100 kV/cm insbesondere von 20 bis 80 kV/cm, eingesetzt.

Das elektro-magnetische Wechselfeld zeichnet sich dadurch aus, daß es entsprechend den geforderten Bedingungen exakt steuerbar ist, wobei die einzustellende Frequenz mit zunehmender Länge der Molekülketten abnimmt und die Feldstärke vorzugsweise wegen der optimalen Nutzung 10 bis 30 % unterhalb der Durchschlagsfestigkeit liegen sollte. Die erforderliche Energie hängt von der Frequenz und dem dielektrischen Verlustfaktor tan δ ab.

In einer erprobten Durchführung des Verfahrens werden die Wechsel-Schwingungen in mindestens zwei zueinander senkrechten Richtung gleichzeitig eingestrahlt.

Durch Einwirkung eines Drehfeldes auf die Dipole, welches in unterschiedlichen Richtungen verschiedene Radien besitzen kann, wird eine gute Isotropie erreicht. Gleichzeitig können dabei evtl. dielektrisch verlustbehaftete Additive günstig verteilt werden.

In einer weiteren Durchführung wird die Amplitude der Wechselschwingung von ihrem Anfangswert bis gegen Null der ursprünglichen Größe verringert.

Durch die Abnahme der Amplitude kann die Energiezufuhr soweit verringert werden, daß eine statistisch gleiche Verteilung aller Dipolrichtungen eintritt, wobei die Ausgangs-Amplitude nur so groß sein sollte, daß die nötige Energie zum Bewegen der Dipole im Kunststoffteil zur Verfügung steht.

In einer anderen Durchführung des Verfahrens wird die Frequenz der Wechselschwingung während der Behandlung verringert oder vergrößert.

Die größte Energiezufuhr erfolgt im Bereich der Relaxationszeiten der Dipole. Hier genügen oft schon relativ kleine Änderungen der Frequenz, um die Energiezufuhr zu variieren. Frequenz-Änderungen sind nämlich dann von Vorteil, wenn schnell die statistisch verteilten Dipolorientierungen eingefroren werden sollen oder wenn die Dipole der zuerst abkühlenden Oberflächenbereiche zur Aufhebung der durch Kühlung eingetretenen Ausrichtung noch einmal kurzfristig erwärmt werden sollen.

In einer möglichen Durchführung des Verfahrens wird die erstarrende Masse vor Erreichen einer Viskosität von 10 000 Pas, insbesondere 6000 Pas, mit dem Wechselfeld beaufschlagt.

Durch Beaufschlagen der in der Form enthaltenen noch relativ niederviskosen Masse mit Feldenergie können die Dipolorientierungen mit verhältnismäßig geringem Energieaufwand statistisch verteit werden, was für zu Doppelbrechung neigende Duroplaste die Voraussetzung und bei Thermoplasten wirtschaftlich günstig ist.

In einer bevorzugten Durchführung des Verfahrens wird das Wechselfeld bei amorphen Thermoplasten als eingeformte Masse bei einer Temperatur größer oder gleich der Glastemperatur ($T_g$) plus 80°C eingeschaltet.

Erst bei dieser Temperatur wird erreicht, daß bei amorphen Thermoplasten eine ausreichend gute statistische Verteilung der Dipole ermöglicht wird. Mittels einer solchen Ausgangstemperatur kann ein weitgehend doppelbrechungsfreies Kunststoffteil erzeugt werden.

In einer vorteilhaften Durchführung des Verfahrens wird das Wechselfeld bei teilkristallinen Thermoplasten als eingeformte Masse bei einer Temperatur größer oder gleich der Schmelztemperatur ($T_s$) plus 10°C eingeschaltet.

Bei einer solchen Ausgangstemperatur können die im kristallinen Bereich der Thermoplaste durch Scherung beim Füllen der Form angefallene Ausrichtung durch die Wechsel-Schwingung wieder aufgehoben werden.

In einer denkbaren Durchführung des Verfahrens wird bei Blends, Co- oder Mischpolymerisaten als eingeformte Masse eine Anfangstemperatur etwas größer als die Temperatur gewählt, die für die Bewegung der Dipole erforderlich ist.

Bei mehrphasigen Massen hängt die Temperatur von demjenigen Schmelzbereich bzw. Glastemperaturpunkt der Komponente ab, der den wesentlichen Beitrag zur Doppelbrechung erzeugt. Es gibt aber auch Massen, bei denen durch die Kombination ein einheitlicher Schmelzbereich vorliegt. Dann reicht diese Temperatur aus, um mechanische oder optische Isotropie im fertigen Kunststoffteil zu erreichen.

Durch das Verfahren entsteht ein Kunststoffteil, welches eine gute statistische Verteilung der Dipolorientierung aufweist, so daß dieses eine technisch nicht mehr störende Doppelbrechung, insbesondere im optischen Bereich aufweist. Die optische Doppelbrechung im Vergleich zu unbehandelten Materialien wird auf 1/2, 1/3, 1/5 und sogar noch mehr reduziert. Auch die Staubablagerung wird dadurch vermindert.

Schließlich werden die Schwingungsunterschiede und damit Verzugstendenzen verringert und das Verhältnis von größter und kleinster Doppelbrechung im Kunststoffteil wird <3:1 oder sogar <2:1.

Für den Fachmann ist es erstaunlich, daß die durch Scherbeanspruchung während des Spritzens und durch Abkühlung in den Randzonen entstandenen großen Doppelbrechungen weitgehend abgebaut worden sind, so daß trotz des ungünstigen Ausgangszustandes eine nahezu gleichmäßige dielektrisch isotrope Verteilung insbesondere in der beaufschlagten Richtung auf geringstem Niveau vorhanden ist.

Als Massen sind Chemie-Werkstoffe aus der Gruppe der Thermoplaste oder Duromere geeignet, die einzeln oder kombiniert als Verbund eingesetzt werden können. Zusätze in Form von Füllstoffen, Pigmenten und Additiven sind möglich, insbesondere, wenn sie einen hohen dielektrischen Verlustfaktor besitzen.

Die Aufheizung der thermoplastischen Massen, bevor sie der erfindungsgemäßen Abkühlung unterworfen werden, kann üblicherweise bei der Formgebung (Spritzgießen) erfolgen. Denkbar ist auch das erneute Erwärmen mittels Hochfrequenz, Mikrowelle oder Ultraschall.

Beispiel 1

Zur Verminderung der Doppelbrechung wurden Polycarbonatplatten von 14 × 14 × 2 mm im elektrischen Wechselfeld bei 2,45 GHz und einer Anfangsfeldstärke von $5.10^4$ V/cm dielektrisch bis zur beginnenden Schmelze erhitzt. Die dielektri-

sche Heizleistung ist N ω E² th δ, mit ω = 2 π f (f = Frequenz, E = elektrische Feldstärke, tg δ = dielektrischer Verlustfaktor).

Die Dauer der Aufheizung wurde zwischen 5 und 15 s variiert. Unmittelbar an die Aufheizphase anschließend folgt die Abkühlphase. Während der Abkühlphase wurde die Feldstärke auf 5 bis 10 % des Wertes in der Aufheizphase reduziert (entsprechend 0,25 bis 1 % der Anfangsheizleistung).

Die Dauer der Abkühlphase betrug 3 bis 5 Minuten. Die Temperatur der Platten lag am Ende der Abkühlphase ca. 20° bis 50°C oberhalb der Raumtemperatur.

Zur Erzeugung des elektrischen Mikrowellenfeldes wurde ein zylindrischer Mikrowellenresonator mit einem $E_{010}$-Feldtyp verwendet. Das elektrische Feld verläuft dabei parallel zur Zylinderachse und hat dort ein Maximum. Die Platte wurde derart in der Mitte des Resonators angeordnet, daß das E-Feld die Fläche der Platte senkrecht durchsetzt.

Die zu Beginn der Aufheizung anliegene Feldstärke von ca. $5.10^4$ V/cm reduzierte sich während des Aufheizprozesses infolge zunehmender dielektrischer Verluste auf ca. $10^4$ V/cm.

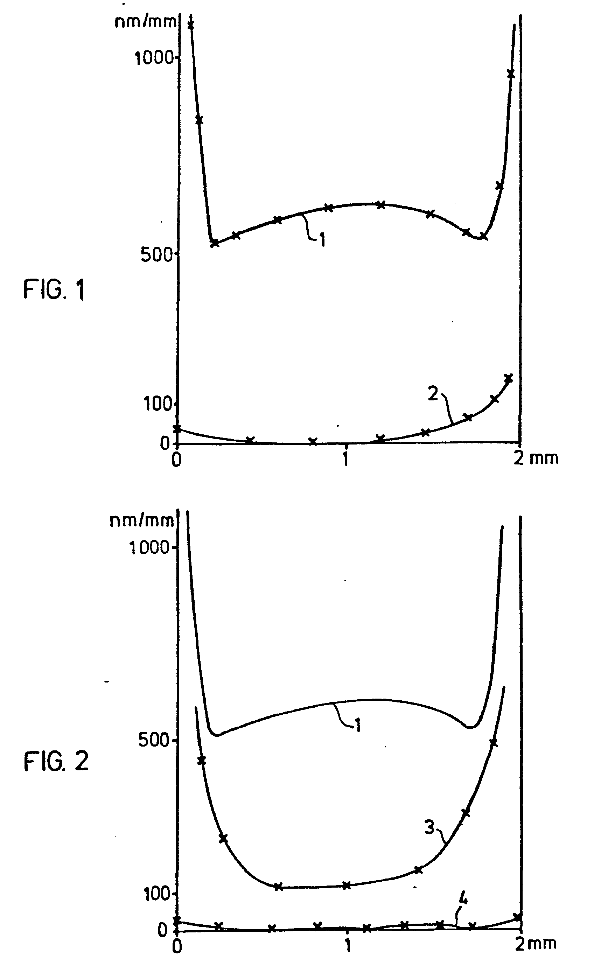

Die Doppelbrechung in der Probe, gemessen in Richtung der Flächennormalen, lag bei der unbehandelten Platte oberhalb 600 nm/mm im Mittelbereich, in den Randzonen stieg sie auf Werte über 1500 nm/mm an. Nach der Behandlung wurde über den gesamten Querschnitt ein Wert von weniger als 300 nm/mm erzielt, insbesondere konnte der typische Anstieg in den Randzonen vermieden werden, siehe Fig. 1.

Beispiel 2

Polycarbonatplatten von 14 × 14 × 2 mm wurden wie in Beispiel 1 beschrieben für die Dauer von 5 bzw. 8 s im Mikrowellenfeld erhitzt und anschließend unter stufenweise vermindertem Feld abgekühlt.

Das elektrische Feld wurde in der Abkühlphase in vier Stufen reduziert. Die Dauer jeder Stufe betrug 1 Minute. Die Feldstärken in den vier Stufen der Abkühlphase betrugen 15-10-5-2,5 % der Feldstärke in der Aufheizphase.

Die Doppelbrechung in der Probe konnte damit bis unter 150 nm/mm gleichmäßig über den Querschnitt reduziert werden, siehe Fig. 2.

Der homogenisierende Effekt der Wechselfeldbehandlung während der Abkühlphase wird (siehe Beispiel PC 2805) durch einen Vergleich mit einer feldfrei abgekühlten Probe sichtbar, siehe Anlage:

1) Aufheizung im MW-Feld, Abkühlung ohne Feld

2) Aufheizung im MW-Feld, Abkühlung bei 10 % Feld,

3) Aufheizung im MW-Feld, Abkühlung bei 15-10-5-2,5 % Feld, je 1 Minute.

## Patentansprüche

1. Verfahren zum Erzeugen eines quasi dielektrisch isotropen Aufbaues mit geringer Doppelbrechung in spritzgegossenen Kunststoffteilen, wobei eine mindestens noch teilweise formbare Masse mit einem elektrischen Wechselfeld beaufschlagt wird, dadurch gekennzeichnet, daß durch Anlegen eines elektrischen Wechselfeldes von $10^4$ bis $2,5 \times 10^9$ Hz der formbaren Masse Wärme erzeugende und die mindestens teilweise beweglichen Dipole einem Relaxationsprozeß unterwerfende Energie zugeführt wird und daß dieses Wechselfeld kontinuierlich und/oder stufenweise bis zum Einfrieren der Dipole vermindert wird.

2. Verfahren nach Anspruch 1, dadurch gekennzeichnet, daß durch Zufuhr von Energie ein Temperaturgradient eingestellt wird, der dem üblichen Temperaturgefälle nach außen entgegenwirkt.

3. Verfahren nach Ansprüchen 1 bis 2, dadurch gekennzeichnet, daß als Wechselfeld ein stehendes elektrisches Wechselfeld mit einer Frequenz von $10^4$ bis $10^8$ Hz, vorzugsweise von $10^4$ bis $10^5$ Hz, bei einer Feldstärke von 1 bis 100 kV/cm, eingesetzt wird.

4. Verfahren nach Ansprüchen 1 bis 3, dadurch gekennzeichnet, daß die Wechsel-Schwingungen in mindestens zwei zueinander senkrechten Richtungen gleichzeitig eingestrahlt werden.

5. Verfahren nach Ansprüchen 1 bis 4, dadurch gekennzeichnet, daß die Amplitude der Wechsel-Schwingungen von ihrem Anfangswert bis gegen Null verringert wird.

6. Verfahren nach Ansprüchen 1 bis 5, dadurch gekennzeichnet, daß die Frequenz der Wechsel-Schwingungen verringert oder vergrößert wird.

7. Verfahren nach Ansprüchen 1 bis 6, dadurch gekennzeichnet, daß die erstarrende Masse vor Erreichen einer Viskosität von 10.000 Pa.s, insbesondere 6.000 Pa.s, mit dem Wechselfeld beaufschlagt wird.

8. Verfahren nech Ansprüchen 1 bis 7, dadurch gekennzeichnet, daß das Wechselfeld bei amorphen Thermoplasten als eingeformte Masse bei einer Temperatur größer oder gleich der Glastemperatur ($T_g$) plus 80°C eingeschaltet wird.

9. Verfahren nach Ansprüchen 1 bis 7, dadurch gekennzeichnet, daß das Wechselfeld bei teilkristallinen Thermoplasten als eingeformte Masse bei einer Temperatur größer oder gleich der Schmelztemperatur ($T_s$) plus 10°C eingeschaltet wird.

10. Verfahren nach Ansprüchen 1 bis 7, dadurch gekennzeichnet, daß bei Blends, Co- oder Mischpolymerisaten als eingeformte Masse eine Anfangstemperatur gleich oder etwas größer als die Temperatur gewählt wird, die für die Bewegung der Dipole erforderlich ist.

## Revendications

1. Procédé pour l'obtention d'une structure quasi diélectriquement isotrope avec faible biréfringence dans les pièces de matière plastique moulées par injection, dans lequel une masse pouvant encore au moins partiellement être mise en forme est soumise à un champ alternatif électrique, caractérisé par un apport d'énergie par application d'un champ alternatif électrique de $10^4$ à $2,5 \times 10^9$ Hz à la masse à mettre en forme, produisant de la chaleur et soumettant les dipôles, au moins partiellement mobiles, à un processus de relaxation, ce champ alternatif étant diminué de manière continue et/ou par étapes jusqu'au moment de l'immobilisation des dipôles.

2. Procédé selon la revendication 1, caractérisé en ce que l'apport d'énergie permet de créer un gradient de température qui s'oppose à la chute de température usuelle vers l'extérieur.

3. Procédé selon les revendications 1 et 2, caractérisé en ce que l'on utilise comme champ alternatif un champ électrique alternatif constant ayant une fréquence de $10^4$ à $10^8$ Hz et, de préférence, de $10^4$ $10^5$ Hz, avec une intensité de champ de 1 à 100 kV/cm.

4. Procédé selon les revendications 1 à 3, caractérisé en ce que les vibrations alternatives sont appliquées simultanément dans au moins deux directions perpendiculaires l'une à l'autre.

5. procédé selon les revendications 1 à 4, caractérisé en ce que l'amplitude des vibrations alternatives est diminuée depuis leur valeur initiale jusqu'à pratiquement zéro.

6. Procédé selon les revendications 1 à 5, caractérisé en ce que la fréquence des vibrations alternatives est diminuée ou augmentée.

7. Procédé selon les revendications 1 à 6, caractérisé en ce que la masse en cours de solidification est soumise au champ alternatif avant qu'elle n'atteigne une viscosité de 10.000 Pa.s. et, en particulier, de 6.000 Pa.s.

8. Procédé selon les revendications 1 à 7, caractérisé en ce que le champ alternatif est appliqué, dans le cas des thermoplastes amorphes constituant la masse moulée, à une température supérieure ou égale à la température de solidification ($T_g$) augmentée de 80°C.

9. Procédé selon les revendications 1 à 7, caractérisé en ce que le champ alternatif est appliqué, dans le cas de thermoplastes partiellement cristallins constituant la masse moulée, à une température supérieure ou égale à la température de fusion ($T_s$) augmentée de 10°C.

10. Procédé selon les revendications 1 à 7, caractérisé en ce que, dans le cas des mélanges des copolymères ou des polymères mixtes utilisés comme masse moulée, on choisit une température initiale égale ou légèrement supérieure à la température requise pour le déplacement des dipôles.

## Claims

1. A process for the production of a quasi-electrically isotropic structure of low birefringence in injection-moulded plastic parts, in which an at least partly mouldable compound is exposed to an electrical alternating field, characterized in that, by application of an electrical alternating field of $10^4$ to $2.5 \times 10^9$ Hz, heat-generating energy which subjects the at least partly moveable dipoles to a relaxation process is supplied to the mouldable compound and in that this alternating field is reduced continuously and/or in stages until the dipoles are frozen in.

2. A process as claimed in claim 1, characterized in that a temperature gradient which counteracts the standard temperature gradient outwards is established by application of energy.

3. A process as claimed in claims 1 and 2, characterized in that a fixed electrical alternating field with a frequency of $10^4$ to $10^8$ Hz and preferably $10^4$ to $10^5$ Hz for a field strength of 1 to 100 kV/cm is used as the alternating field.

4. A process as claimed in claims 1 to 3, characterized in that the alternating oscillations are introduced simultaneously in at least two directions perpendicular to one another.

5. A process as claimed in claims 1 to 4, characterized in that the amplitude of the alternating oscillations is reduced from its initial value to approaching zero.

6. A process as claimed in claims 1 to 5, characterized in that the frequency of the alternating oscillations is reduced or increased.

7. A process as claimed in claims 1 to 6, characterized in that the alternating field is applied to the solidifying compound before it reaches a viscosity of 10,000 Pa.s and, more particularly, 6,000 Pa.s.

8. A process as claimed in claims 1 to 7, characterized in that, where amorphous thermoplastics are used as the moulding compound, the alternating field is switched on at a temperature above or equal to the glass temperature ($T_g$) plus 80°C.

9. A process as claimed in claims 1 to 7, characterized in that, where partly crystalline thermoplastics are used as the moulding compound, the alternating field is switched on at a temperature above or equal to the melting temperature ($T_s$) plus 10°C.

10. A process as claimed in claims 1 to 7, characterized in that, where blends or copolymers are used as the moulding compound, the starting temperature is equal to or slightly higher than the temperature necessary for moving the dipoles.

FIG. 1

FIG. 2